# EUROPEAN PATENT APPLICATION

(11) **EP 1 785 678 A2**
(43) Date of publication of application: **16.05.2007**
(21) Application number: 06022374.0
(22) Date of filing: 26.10.2006
(51) Int. Cl.: F24F 12/00, F24F 11/00, F24F 1/00

(54) **Air conditioner**

(30) Priority: 14.11.2005 JP 2005329222
(71) Applicant: SANYO ELECTRIC CO., LTD., Moriguchi-shi, Osaka-fu (JP)
(72) Inventor: Motegi, Yasuhiro, Gunma-ken (JP); Ninomiya, Kouzou, Ashikaga-shi Tochigi-ken (JP); Nakajima, Kenichi, Gunma-ken (JP); Hashimoto, Masuyuki, Ota-shi Gunma-ken (JP)
(74) Representative: Leitner, Waldemar

(57) **Abstract**

An air conditioner (1) of the present invention can selectively perform air supply, exhaust, and air supply and exhaust operations and, particularly, perform effective intake of outside air by heat-exchanging indoor air to be exhausted and outdoor air to be introduced in a total heat exchanger in the simultaneous air supply and exhaust operation. A ventilation unit (20) comprises a total heat exchanger (54) for performing, in an air supply and exhaust mode, heat exchange between outdoor air to be supplied into a room through an air supply route and indoor air to be discharged outside the room through an exhaust passage. The total heat exchanger comprises a total heat-transfer element detachably stored in a case.

## Description

### BACKGROUND OF THE INVENTION

### Field of the Invention

The present invention relates to an air conditioner with a ventilation device incorporated therein, particularly, an air conditioner with a ventilation unit capable of selectively performing air supply, exhaust, and simultaneous air supply and exhaust operations.

### Description of the Related Art

In a conventional air conditioner, for example, a ventilation device adapted to simultaneously perform exhaust and intake by simultaneously driving an exhaust fan and an intake fan using the same motor is stored and arranged in a side space of a heat exchanger stored in an indoor unit of the air conditioner (e.g., refer to Japanese Patent Application Laid-Open No. 2002-005472).

The air conditioner disclosed in this literature can fulfill the function as the ventilation device simultaneously performing exhaust and intake since the exhaust fan and the intake fan are simultaneously driven using the same motor, but is not adapted to perform only exhaust or only intake. Further, this air conditioner has the problem that the indoor unit must be improved into a considerably horizontally type due to the ventilation device of a laterally extended shape which is resulted from the structure of mounting sirocco fans on both lateral sides of the motor and attaching exhaust hoses and intake hoses to the respective fan casings.

### SUMMARY OF THE INFNETION

Considering such a point, the present invention provides an air conditioner, capable of effectively ventilating a room by storing a ventilation unit capable of selectively performing air supply, exhaust and simultaneous air supply and exhaust operations within an indoor-set air conditioner, capable of thinning the ventilation unit, so that the indoor-set air conditioner can sufficiently contain the ventilation unit without lateral extension as described above, even in a case of arranging and storing it in the side space of the heat exchanger within the air conditioner and, particularly, capable of performing effective intake of outside air by heat-exchanging indoor air to be exhausted and outdoor air to be introduced by a total heat exchanger in the simultaneous air supply and exhaust operation.

An air conditioner according to a first aspect of the present invention comprises a ventilation device performing an exhaust operation for discharging indoor air outside a room and an air supplying operation for introducing outdoor air into the room, the ventilation device being incorporated in an air conditioner body having a heat exchanger and a blower arranged therein so as to perform air-conditioning of the room, in which the ventilation device comprises an air supply and exhaust part and an exhaust exclusive part, the air supply and exhaust part being provided with an air supply and exhaust fan and an air supply and exhaust passage related thereto, and the exhaust exclusive part being provided with an exhaust exclusive fan and an exhaust passage related thereto; and the ventilation device is controlled to supply, in an air supply mode, outdoor air into the room through an air supply route of the air supply and exhaust passage by operation of the air supply and exhaust fan, with the exhaust exclusive fan being stopped, to discharge, in an exhaust mode, the indoor air outside the room through an exhaust route of the air supply and exhaust passage and through the exhaust passage by operation of the air supply and exhaust fan and the exhaust exclusive fan, and to supply, in an air supply and exhaust mode, outdoor air into the room through the air supply route of the air supply and exhaust passage by operation of the air supply and exhaust fan and also discharge the indoor air outside the room through the exhaust passage by operation of the exhaust exclusive fan, with the outdoor air to be passed through the air supply route and the indoor air to be passed through the exhaust passage being heat-exchanged in a total heat exchanger in the air supply and exhaust mode.

An air conditioner according to a second aspect of the present invention comprises a ventilation device performing an exhaust operation for discharging indoor air outside a room and an air supplying operation for introducing outdoor air into the room, the ventilation device being incorporated in an air conditioner body having a heat exchanger and a blower arranged therein to perform air-conditioning of the room, in which the ventilation device comprises an air supply and exhaust part and an exhaust exclusive part, and constitutes a ventilation unit composed of the air supply and exhaust part provided with a one-way rotating air supply and exhaust fan and an air supply and exhaust passage related thereto and the exhaust exclusive part provided with an exhaust exclusive fan and an exhaust passage related thereto; and the ventilation unit is controlled to supply, in an air supply mode, outdoor air into the room through an air supply route of the air supply and exhaust passage by operation of the air supply and exhaust fan, with the exhaust exclusive fan being stopped, to discharge, in an exhaust mode, the indoor air outside the room through an exhaust route of the air supply and exhaust passage and through the exhaust passage by operation of the air supply and exhaust fan and the exhaust exclusive fan, and to supply, in an air supply and exhaust mode, outdoor air into the room through an air supply route of the air supply and exhaust passage by operation of the air supply and exhaust fan and also discharge the indoor air outside the room through the exhaust passage by operation of the exhaust exclusive fan, with the outdoor air to be passed through the air supply route and the indoor air to be passed through the exhaust passage being heat-exchanged in a total heat exchanger in the air supply and exhaust mode.

According to a third aspect of the invention, in the first or second embodiment, the air supply and exhaust passage is switchingly controlled to the air supply route and to the exhaust route by a selector valve, the selector valve comprises a first selector valve A which switches the air suction route to the air supply and exhaust fan between an indoor air suction route through an indoor air inlet and an outdoor air suction route through an outdoor air inlet, and a second selector valve B which switches the air discharge route from the air supply and exhaust fan between an outdoor exhaust route for discharging indoor air outside the room through an indoor air exhaust port and an indoor supply route for supplying outdoor air into the room through an outdoor air supply port, so that the flow of air blown out of the air supply and exhaust fan is switchingly controlled to be guided to the total heat exchanger through the second selector valve B or to be guided outside the room through the second selector valve B.

According to a fourth aspect of the present invention, in the first to third aspects of the invention, the total heat exchanger comprises a total heat-transfer element detachably stored in a case, the total heat-transfer element having two or more layers of air passages formed so that the outdoor air to be passed through the air supply route and the indoor air to be passed through the exhaust passage form flows intersecting through a heat-exchangeable vapor-permeable partitioning sheet, and the case is adapted to be attachable to and detachable from the ventilation device.

In an air conditioner according to a fifth aspect of the present invention comprising a ventilation device performing an exhausting operation for discharging indoor air outside a room and an air supplying operation for introducing outdoor air into the room, the ventilation device being incorporated in an air conditioner body having a heat exchanger and a blower arranged therein so as to perform air-conditioning of the room, the air conditioner further comprises a total heat exchanger which performs, in an air supply and exhaust mode by the ventilation device, heat-exchange between the outdoor air to be supplied into the room through an air supply route and the indoor air to be discharged outside the room through an exhaust passage, the total heat exchanger comprises a total heat-transfer element detachably stored in a case, the total heat-transfer element being adapted so that the outdoor air to be passed through the air supply route and the indoor air to be passed through the exhaust passage form flows intersecting through a heat-exchangeable vapor-permeable partitioning sheet, and the case is adapted to be attachable to and detachable from the front side of the air conditioner.

According to a sixth aspect of the present invention, in the first to fifth aspects of the invention, the total heat exchanger is covered with a front panel, while detachably storing, in a case, the total heat-transfer element having two or more layers of air passages each formed between heat-exchangeable vapor-permeable partitioning sheets laminated with a space by a corrugated or angle passage member so that the outdoor air to be passed through the air supply route and the indoor air to be passed through the exhaust passage form flows intersecting substantially at right angles through the vapor-permeable partitioning sheet, and the case is adapted to be attachable to and detachable from the front side of the air conditioner in a state where the front panel is opened.

In the first aspect of the invention, since the air supply mode, the exhaust mode and the air supply and exhaust mode are selectable, indoor air, when contaminated, can be effectively rapidly exhausted, in the exhaust mode, by operation (ON) of the air supply and exhaust fan and the exhaust exclusive fan. In the air supply mode, indoor air can be effectively purified also by introducing outside air by operation of the air supply and exhaust fan. In the air supply and exhaust mode, the effect of promoting indoor air purification can be sufficiently exhibited since air supply and exhaust are simultaneously performed by operation (ON) of the air supply and exhaust fan and the exhaust exclusive fan. Particularly, since the outdoor air to be passed through the air supply route and the indoor air to be passed through the exhaust passage are heat-exchanged in the total heat exchanger in the air supply and exhaust mode, the outdoor air to be introduced can be effectively cooled and dehumidified in cooling operation, and effectively heated and humidified in heating operation by the heat-exchange effect of sensible heat and latent heat. Therefore, a preferable ventilation effect can be obtained, effectively using the indoor air to be exhausted.

In the second aspect of the invention, in addition to the effect of the first aspect of the invention, the ventilation device can be assembled independently from the air conditioner, and its incorporation into the air conditioner can be also facilitated, since the ventilation device has a ventilation unit structure in which the air supply and exhaust part provided with the air supply and exhaust fan and the exhaust exclusive part provided with the exhaust exclusive fan are combined and integrated together.

In the third aspect of the invention, in addition to the effect of the first aspect of the invention, the air supply mode, the exhaust mode and the air supply and exhaust mode can be easily and accurately controlled since such a control is attained by the passage switching by the first selector valve and the second selector valve and the operation (ON) of the air supply and exhaust fan and the exhaust exclusive fan.

In the fourth aspect of the invention, in addition to the effect of the third aspect of the invention, outdoor air can be introduced in a preferable state, since the total heat exchanger gives the influence of the indoor air to be exhausted to the outdoor air to be introduced both in cooling operation and heating operation by the heat exchange and vapor permeating action which are performed between the outdoor air to be passed through the air supply route and the indoor air to be passed through the exhaust passage. Further, the incorporation of the total heat-transfer element to the ventilation device or cleaning or replacement of the total heat-transfer element is facilitated, since the total heat-transfer element is detachably stored in the case, and the case is attachable to and detachable from the ventilation device.

In the fifth aspect of the invention, outdoor air can be introduced in a preferable state since the total heat exchanger gives the influence of the indoor air to be exhausted to the outdoor air to be introduced in both cooling operation and heating operation by the heat exchange and vapor-permeating action which are performed between the outdoor air to be passed through the air supply route and the indoor air to be passed through the exhaust passage. Further, the incorporation of the total heat-transfer element to the ventilation device or cleaning or replacement of the total heat-transfer element is facilitated since the total heat exchanger is attachable to and detachable from the front side of the air conditioner.

In the sixth aspect of the invention, in addition to the above-mentioned effects, the heat-exchange and vapor-permeating action can be more effective performed between one air and the other air, since the total heat exchanger is adapted so that the outdoor air and the indoor air intersect substantially at right angles through the partitioning sheet in two or more layers. The outdoor air can be introduced in a preferable state in both cooling operation and heating operation, since the influence of the indoor air to be exhausted is given to the outdoor air. The appearance design of the air conditioner can be improved since the total heat exchanger is covered with the front panel and shielded during operation of the air conditioner, and the incorporation of the total heat-transfer element to the ventilation device or cleaning or replacement of the total heat-transfer element is also facilitated, since works therefor can be performed in a state where the front panel of the air conditioner is opened.

### BRIEF DESCRIPTION OF THE DRAWINGS

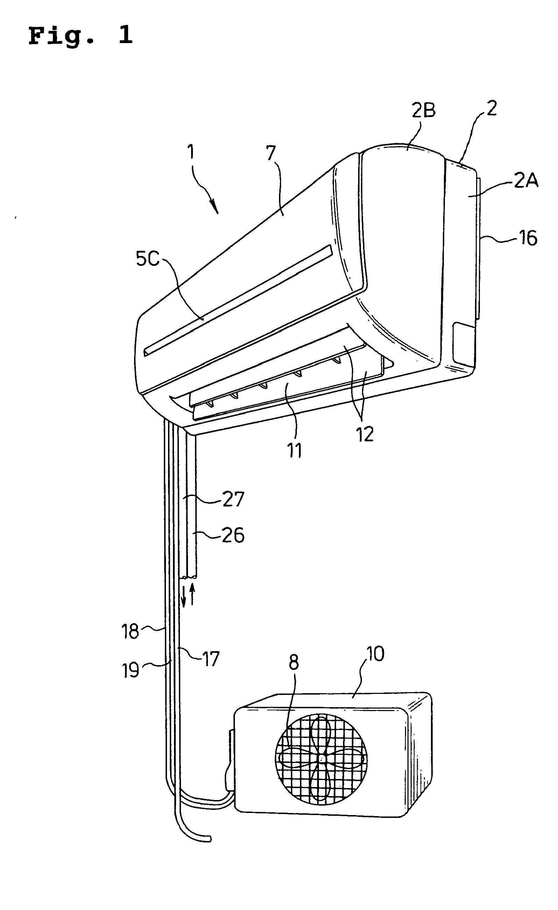

Fig. 1 is a perspective view of separate air conditioning equipment composed of a set of an air conditioner according to the present invention and an outdoor unit (Example 1);

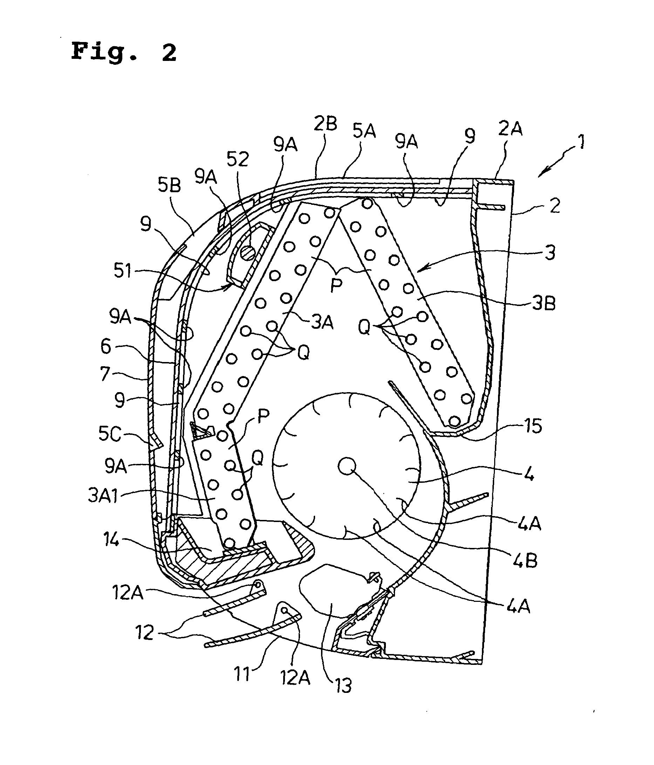

Fig. 2 is a vertical sectional side view of the air conditioner according to the present invention (Example 1);
Fig. 3 is a front perspective view of an air conditioner body of the air conditioner according to the present invention, showing a ventilation unit storage part in a state where a front panel is opened (Example 1);

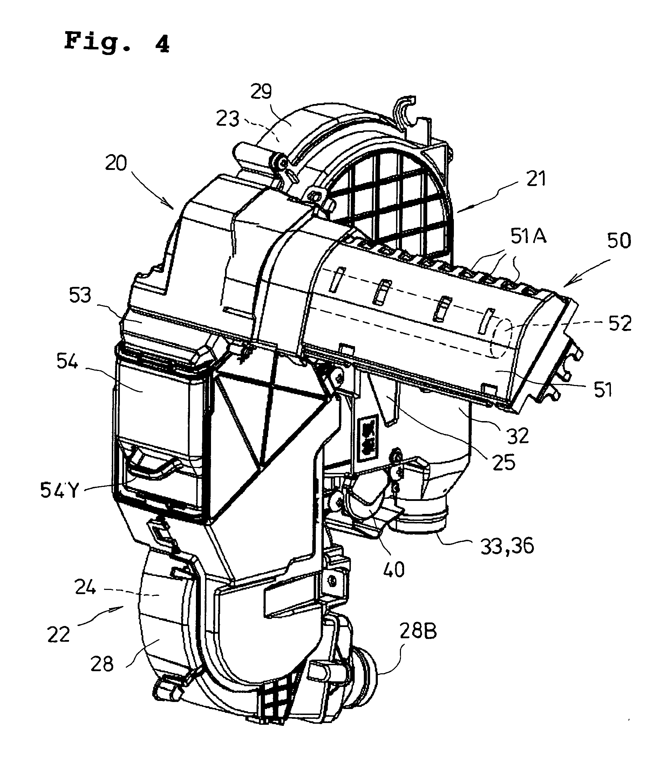

Fig. 4 is a right-side perspective view of a ventilation unit according to the present invention (Example 1);

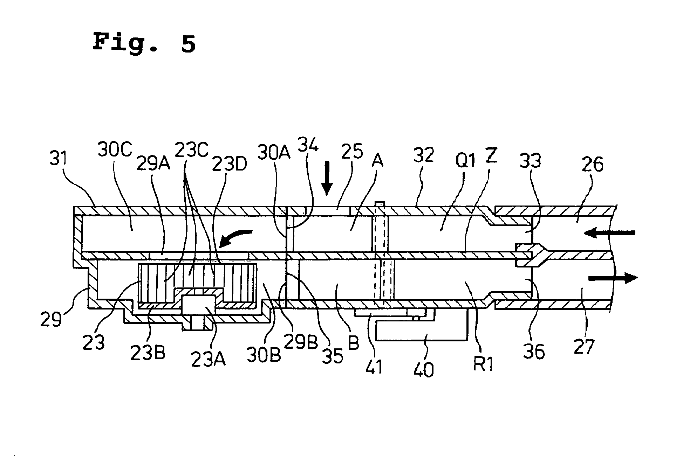

Fig. 5 is a sectional view of an air supply and exhaust part of the ventilation unit according to the present invention (Example 1);
Fig. 6 is a perspective view of the ventilation unit according to the present invention, illustrating an air supply mode (Example 1);
Fig. 7 is a view illustrating the state of a first selector valve A in the air supply mode of the ventilation unit according to the present invention (Example 1);
Fig. 8 is a view illustrating the state of a second selector valve B in the air supply mode of the ventilation unit according to the present invention (Example 1);
Fig. 9 is a perspective view of the ventilation unit according to the present invention, illustrating an exhaust mode (Example 1);
Fig. 10 is a view illustrating the state of the first selector valve A in the exhaust mode of the ventilation unit according to the present invention (Example 1);
Fig. 11 is a view illustrating the state of the second selector valve B in the exhaust mode of the ventilation unit according to the present invention (Example 1);
Fig. 12 is a perspective view of the ventilation unit according to the present invention, illustrating the exhausting flow of indoor air and the supplying flow of outdoor air in a simultaneous air supply and exhaust mode (Example 1);
Fig. 13 is a perspective view of the ventilation unit according to the present invention, illustrating the exhausting flow of indoor air and the supplying flow of outdoor air in the simultaneous air supply and exhaust mode (Example 1);

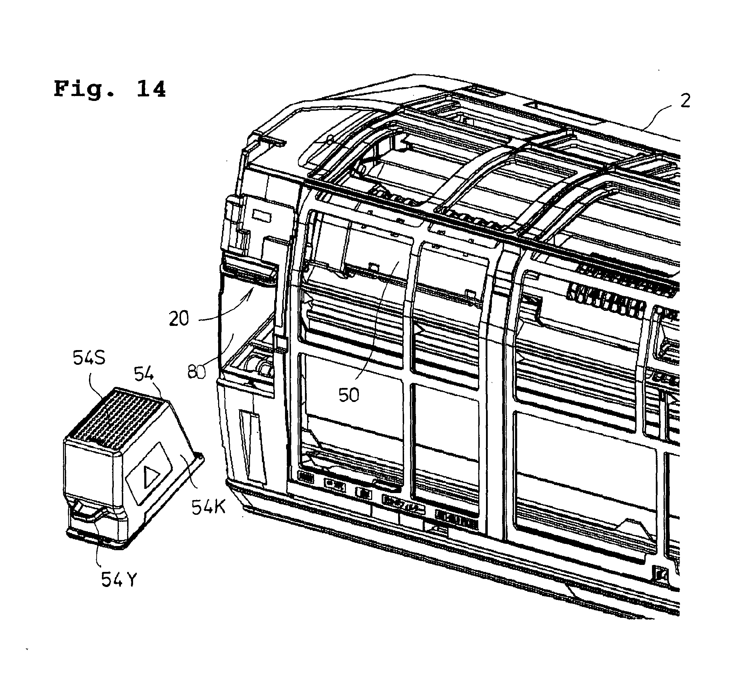

Fig. 14 is a front perspective view of the air conditioner body, illustrating a state where a total heat exchanger is removed from the ventilation unit according to the present invention (Example 1);

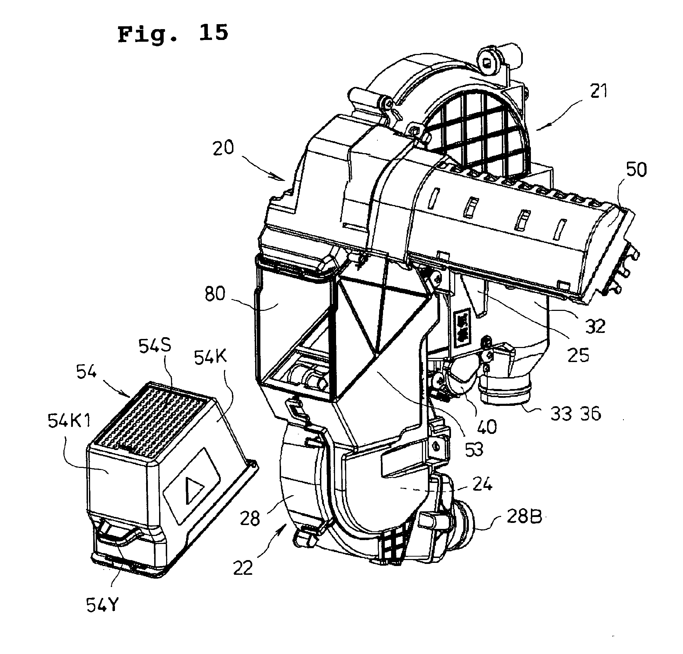

Fig. 15 is a front perspective view of the ventilation unit, illustrating a state where the total heat exchanger is removed from the ventilation unit according to the present invention (Example 1); and
Fig. 16 is a front perspective view of the total heat exchanger according to the present invention, illustrating a state where a total heat-transfer element is removed therefrom (Example 1).

### BEST MODE FOR CARRYING OUT THE INVENTION

The ventilation unit in the air conditioner of the present invention comprises a total heat exchanger in which outdoor air to be supplied into a room through an air supply route and indoor air to be discharged outside the room through an exhaust passage are heat-exchanged in an air supply and exhaust mode, the total heat exchanger comprises a total heat-transfer element detachably stored in a case, the total heat-transfer element being adapted so that the outdoor air to be passed through the air supply route and the indoor air to be passed through the exhaust passage form flows intersecting through a heat-exchangeable partitioning wall, and the case is adapted to be attachable to and detachable from the air conditioner.

A preferred embodiment of the present invention will be described in reference to the accompanying drawings.

### [Example 1]

In the drawings, an air conditioner 1 of the present invention is a wall-hanging indoor air conditioner mountable on an indoor wall, which constitutes one set of separate air-conditioning equipment with an outdoor unit 10 containing a compressor and condenser for refrigerant, a heat exchanging blower 8 thereof, and the like. The air conditioner 1 is connected to the outdoor unit 10 through a refrigerant piping circuit 18 and an electric circuit 19. The air conditioner 1 contains a heat exchanger 3, a blower 4 and the like, and has air suction parts (air inlets described later) formed on the upper surface and the front surface thereof, respectively. The separate air-conditioning equipment is adapted so that cooling operation, heating operation, dehumidifying operation, ventilating operation, and indoor air circulating operation can be selected based on operation of a selection switch for performing indoor air-conditioning in a house by the air conditioner 1. The selection switch is generally composed, for improvement in usability, of a switch provided on a remote controller (not shown) which is optionally remotely operable by users.

Specifically, the air conditioner 1 has a horizontally long shape consisting of an air conditioner body 2 and a front panel 7, and the air conditioner body 2 is composed of a base body part 2A located on the back side of the air conditioner 1 and a cover part 2B incorporated to the front side of the base body part 2A. The cover part 2B has a cross-directionally opened frame shape matched to the outer shape of the air conditioner 1, and the front panel 7 is detachably mounted on the cover part 2B so as to cover the front opening thereof. The front panel 7 is removable or openable/closable, and as the opening and closing structure thereof, a system for pivotally supporting the front panel at an upper portion of the cover part 2B to be rotatable upward, a system for moving the front panel, which is generally closed, forwardly by an electric motor device in accordance with operation of the air conditioner 1 to form upper and lower air inlets, and other systems can be adapted. The heat exchanger 3, the blower 4, an electric equipment box and the like are mounted on the front side of the base body part 2A, with the circumference thereof being covered with the cover part 2B, and the front face of the air conditioner 1 is covered with the front panel 7. The air conditioner 1 is installed by hitching hook parts provided on the back surface of the base body part 2A to a fixing plate 16 screwed to an indoor wall of a house.

The heat exchanger 3 and the blower 4 are arranged within the air conditioner body 2. The heat exchanger 3 is composed of a front-side heat exchange part 3A and a rear-side heat exchange part 3B which are arranged in a substantially reversed V-shape, and the front-side heat exchange part 3A has a backwardly bent part 3A1 at the lower end. The heat exchanger 3 has a structure of plate fin-type heat exchanger in which refrigerant pipes Q are arranged through a number of juxtaposed aluminum thin plates P. The blower 4 is a crossflow fan comprising a number of laterally extending blades 4A arranged on the circumference and a horizontal shaft 4B to be rotated by an electric motor, and it is arranged on the inside of the heat exchanger 3, with a length substantially extending over the whole lateral width of the heat exchanger 3.

Air inlets 5A, 5B and 5C are formed laterally long in the upper surface and front surface of the horizontally long air conditioner body 2, respectively, so that the air sucked into the air conditioner 1 through the air suction parts by operation of the blower 4 flows from the upper surface and the front surface toward the heat exchanger 3. The upper surface-side air inlet 5A is formed laterally long in the upper surface of the air conditioner body 2, the front surface-side air inlet 5B is formed laterally long between the air conditioner body and the upper end of the front panel 7 on the front side of the air conditioner body 2, and the air inlet 5C is formed in a lower portion of the front panel 7. A mesh-like filter 6 is arranged on the front side of the air conditioner body 2 in conformation to the air inlets 5A, 5B and 5C.

The filter 6 is formed by integrating a filter screen to a synthetic resin frame formed on the circumference thereof simultaneously with injection molding of the frame, and right and left filters 6 are detachably held by sliding and inserting them upwardly, in a state where the front panel 7 is opened, from the front opening side of the cover part 2B to filter support rail parts 9 formed at both lateral side parts of the cover part 2B of the air conditioner body 2 and at a middle part thereof. For the purpose of facilitating the sliding of the filter 6 to the filter support rail parts 9 and preventing the falling of the middle part of the filter 6 toward the heat exchanger 3 side, a lattice-like rail is formed by horizontal rails 9A extending between the lateral filter support rail parts 9 and 9 and vertical rails 9B vertically extending over the horizontal rails 9A as a back-side support part for the filter 6.

The air heat-exchanged in heat exchangers 3A and 3B by operation of the blower 4 is blown forward through an air outlet 11 of laterally long rectangular shape formed in a front lower portion of the air conditioner 1. The air outlet 11 is provided with vertically movable wind direction boards 12 pivotally supported by shafts 12A to be vertically movable and laterally movable wind direction boards 13 dividing the blown air flow to a plurality of lateral flows. Dewdrops which fall from the heat exchangers 3A and 3B are received by dew receiving trays 14 and 15 provided below them, and discharged outdoors through a drain pipe 17.

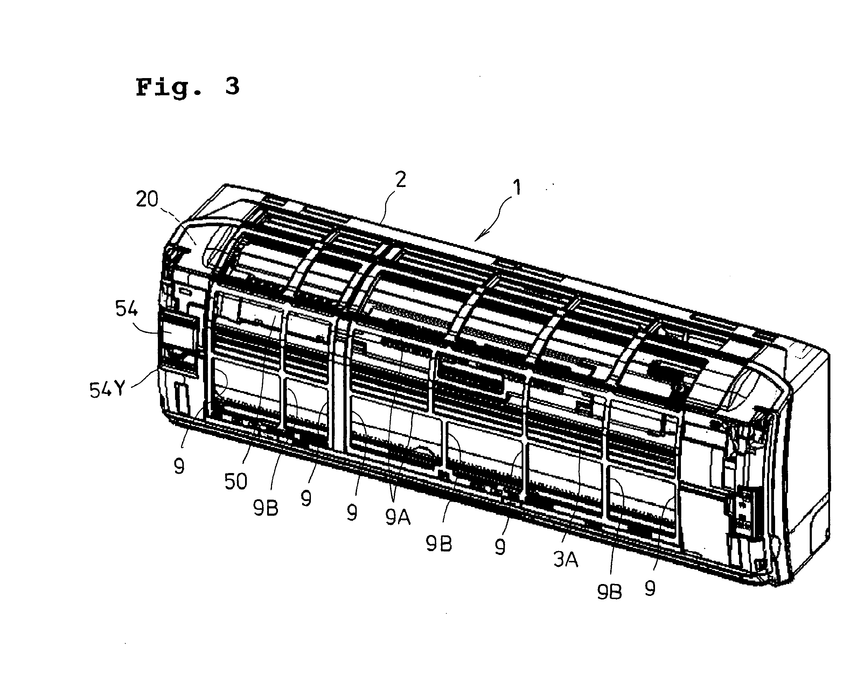

A ventilation unit 20 performing intake of outdoor air into a room of a building (house) (air supply) and discharge of indoor air (exhaust) is incorporated in the air conditioner 1 as one of air-conditioning mechanisms. The ventilation device 20 comprises, as described below, an air supply and exhaust part 21 and an exhaust exclusive part 22, and constitutes a ventilation unit having an integrated unit structure composed of the air supply and exhaust part 21 provided with a one-way rotating air supply and exhaust fan 23 and an air supply and exhaust passage related thereto and the exhaust exclusive part 22 provided with an exhaust exclusive fan 24 and an exhaust passage related thereto. Therefore, the ventilation device 20 is hereinafter called a ventilation unit 20. The ventilation unit 20 is arranged on a side of the heat exchanger 3 and the blower 4, and in Fig. 3, the state where it is arranged in an internal space on the left side is shown. The ventilation unit 20 is adapted to be switchingly controllable to an air supply mode, an exhaust mode and a simultaneous air supply and exhaust mode by a user of the air conditioner 1 through the selection switch. The ventilation unit 20 having the integrated structure of the air supply and exhaust part 21 and the exhaust exclusive part 22 is connected to an outdoor air supply line 26 and an outdoor exhaust line 27 described below in a state where it is incorporated in the side space of the heat exchanger 3 within the air conditioner 1.

The air supply and exhaust part 21 is provided with the one-way rotating air supply and exhaust fan 23 and the air supply and exhaust passage related thereto, and the exhaust exclusive part 22 is provided with the exhaust exclusive fan 24 and the exhaust passage related thereto. The air supply and exhaust fan 23 and the exhaust exclusive fan 24 are arranged to be substantially flush with each other, whereby the air supply and exhaust part 21 and the exhaust exclusive part 22 have a substantially flush layout. In the drawings, the air supply and exhaust part 21 and the exhaust exclusive part 22 are laid out with a substantially flush vertical relation so that the air supply and exhaust fan 23 and the exhaust exclusive fan 24 have a substantially flush vertical relation. According to this, the whole ventilation unit can be thinned and miniaturized so as to be suitably incorporated in a small space on the side of the heat exchanger 3 within the air conditioner 1.

The air supply and exhaust passage comprises a first selector valve A which switches the air suction route to the air supply and exhaust fan 23 between an indoor air suction route P through an indoor air inlet 25 and an outdoor air suction route Q through the outdoor air supply line 26, and a second selector valve B which switches the air discharge route from the air supply and exhaust fan 23 between an outdoor exhaust route R for discharging indoor air to the outside through the outdoor exhaust line 27 and an indoor supply route S for supplying outdoor air to the inside of the house.

Each of the air supply and exhaust fan 23 and the exhaust exclusive fan 24 is composed of a centrifugal blowing fan for ensuring a sufficient volume of draft, and in this example, a sirocco fan that is one type of such a fan is employed. A sirocco fan 23 comprises a disk-like end plate 23B the center of which is mounted on the rotating shaft of a driving electric motor 23A, and a number of blades 23C extending in a right-angled direction to the end plate 23B which are mounted on the periphery of the end plate 23B, and operates to discharge air sucked from a suction side 23D that is opposed to the end plate 23B to the circumference through the blades 23C. A sirocco fan 24 has the same structure as the sirocco fan 23.

The exhaust exclusive part 22 comprises the exhaust exclusive fan 24 and the exhaust passage related thereto. The exhaust exclusive sirocco fan 24 and a driving electric motor 24A therefor are stored in a fan casing 28, and the fan casing 28 has a suction port 28A formed on one side surface thereof in opposition to the suction side of the sirocco fan 24, and an exhaust port 28B formed in a part of the circumferential wall thereof corresponding to the periphery of the sirocco fan 24. According to this structure, an air passage extending from the suction port 28A to the exhaust port 28B forms the exhaust passage of the exhaust exclusive part 22. Although the exhaust port 28B may be allowed to communicate with the outdoor exhaust line 27, a different exhaust pipe extending outdoors (not shown) can be connected thereto.

In the air supply and exhaust part 21, the air supply and exhaust fan 23 and the driving electric motor 23A therefor are stored in a fan casing 29, and the fan casing 29 has a suction port 29A formed on one side surface thereof in opposition to the sucking side of the sirocco fan 23, and an exhaust port 29B formed in a part of the circumferential wall thereof corresponding to an exhaust space 30B around the sirocco fan 23. In order to suck air from the whole circumference of the suction port 29A, a suction space 30C extending to the periphery of the suction port 29A is formed. This suction space 30C is formed by extending the fan casing 29 and covering its end part with a side plate 31. A suction port 30A is formed in a part of the circumferential wall of the suction space 30C to be located on the same side of the exhaust port 29B but separate from the exhaust port 29B.

The air supply and exhaust part 21 further comprises a duct part 23 connected to the fan casing 29. The duct part 32 comprises a suction port 33 sucking outdoor air from the outdoor air supply line 26 and a suction port 34 connected to the suction port 30A, which are formed substantially flush on the same side as the suction space 30C, and these ports constitute a partial passage Q1 of the outdoor air suction route Q. Although an indoor air inlet 25 is formed on the side surface of the partial passage Q1 of the outdoor air suction route Q so as to be open toward the heat exchanger 3, it can be formed so as to partially cover the side plate 31.

The duct part 32 comprises an exhaust port 35 connected to the exhaust port 29B, an exhaust port 36 for discharging indoor air to the outdoor exhaust line 27, and an air supply port 37 for supplying outdoor air inside the house, which are formed substantially flush on the same side as the discharge space 30B, and these constitute a partial passage R1 of the outdoor exhaust route R and a partial passage S1 of the indoor supply route S. According to this structure, the partial passage R1 of the outdoor exhaust route R and the partial passage S1 of the indoor supply route S are arranged in a superposed state with the partial passage Q1 of the outdoor air suction route Q through a partitioning wall Z.

The first selector valve A and the second selector valve B are provided in the duct part 32, and the first selector valve A and the second selector valve B are operated by a single electric motor 40 mounted on the duct part 32 and a reduction gear mechanism 41 rotated thereby. The first selector valve A performs opening and closing of the indoor air suction route P and opening and closing of the outdoor air suction route Q. Further, the second selector valve B performs opening and closing of the outdoor exhaust route R and opening and closing of the indoor supply route S. Such a switching control is performed by selection of the air supply mode or the exhaust mode by a user through the switch of the remote controller.

For disinfection and sterilization of outdoor air to be supplied inside the house, an ultraviolet ray generator 50 is integrated with the ventilation unit 20 and arranged on the back side of the filter 6 on the front side of the heat exchanger 3 within the air conditioner 1. The ultraviolet ray generator 50 comprises an ultraviolet ray generation part 52 such as a horizontally long ultraviolet lamp or ultraviolet light emitting device (LED), the circumference of which is covered with a duct-like cover 51 having a plurality of air outlets 51A extending from the upper part to the lower part so as to form an air passage for outdoor air to be supplied inside the house by the ventilation unit 20, and the ultraviolet generator 50 is connected to the duct part 32 through a duct member 53 having one end allowed to communicate with the air supply port 37 and the other end allowed to communicate with a one-side opening of the cover 51.

A total heat exchanger 54 for mutually crossing and heat-exchanging the outdoor air and the indoor air carried in the duct member 53 while passing in the respective passages without mixing is detachably mounted on the duct member 53. For this purpose, the duct member 53 comprises a storage part 80 for the total heat exchanger 54 which is opened to the front side of the air conditioner 1 is formed in the duct member 53, so that the total heat exchanger 54 can be attached to and detached from the front side of the air conditioner 1 as the ventilation unit 20 is incorporated in the air conditioner 1.

As described above, the ventilation unit 20 comprises the air supply and exhaust part 21 and the exhaust exclusive part 22, and the air supply and exhaust part 21 is provided with the one-way rotating air supply and exhaust fan 23 and, as the air supply and exhaust passage related thereto, the indoor air suction route P, the outdoor air suction route Q, the outdoor exhaust route R and the indoor supply route S. The exhaust exclusive part 22 is provided with the exhaust exclusive fan 24 and the related exhaust passage W formed by the fan casing 28 surrounding it. The air supply and exhaust passage of the air supply and exhaust part 21 includes the first selector valve A which switches the air suction route to the air supply and exhaust fan 23 between the indoor air suction route P through the indoor air inlet 25 and the outdoor air suction route Q through the outdoor air supply line 26, and the second selector valve B which switches the air discharge route from the air supply and exhaust fan 23 between the outdoor exhaust route R for discharging indoor air to the outside through the outdoor exhaust line 27 and the indoor supply route S for supplying outdoor air to the inside of the house.

The operations of the air supply mode, the exhaust mode and the air supply and exhaust mode by the ventilation unit 20 will be then described. When the ventilation unit 20 is selectively set to the air supply mode by the selection switch, outdoor air is supplied to the inside of the house through the outdoor air suction route Q and the indoor supply route S composing the air supply route of the air supply and exhaust passage by operation (ON) of the air supply and exhaust fan 23, with the exhaust exclusive fan 23 being stopped (OFF). When the ventilation unit 20 is selectively set to the exhaust mode by the selection switch, the indoor air of the house is discharged outdoors through the indoor air suction route P and the outdoor exhaust route R composing the exhaust route of the air supply and exhaust passage by operation of the air supply and exhaust fan 23 in addition to the discharge through the exhaust passage W by operation of the exhaust exclusive fan 24.

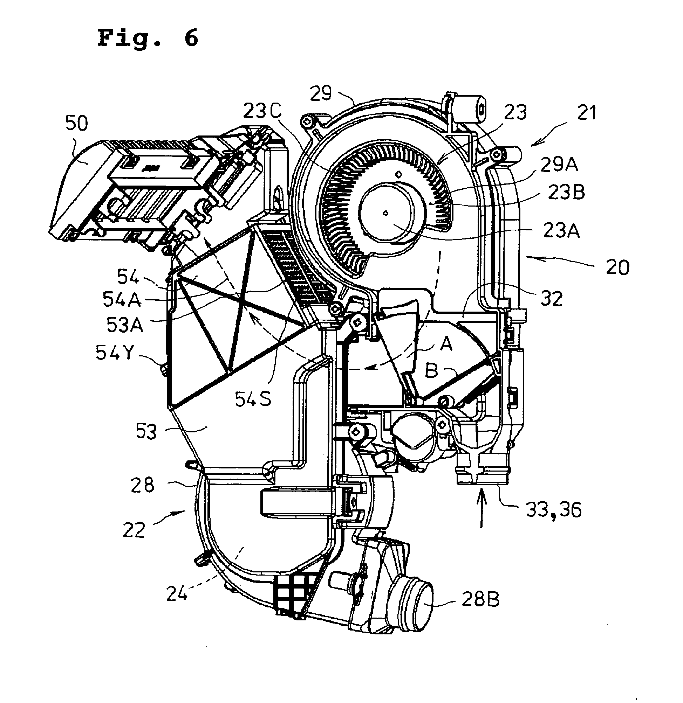

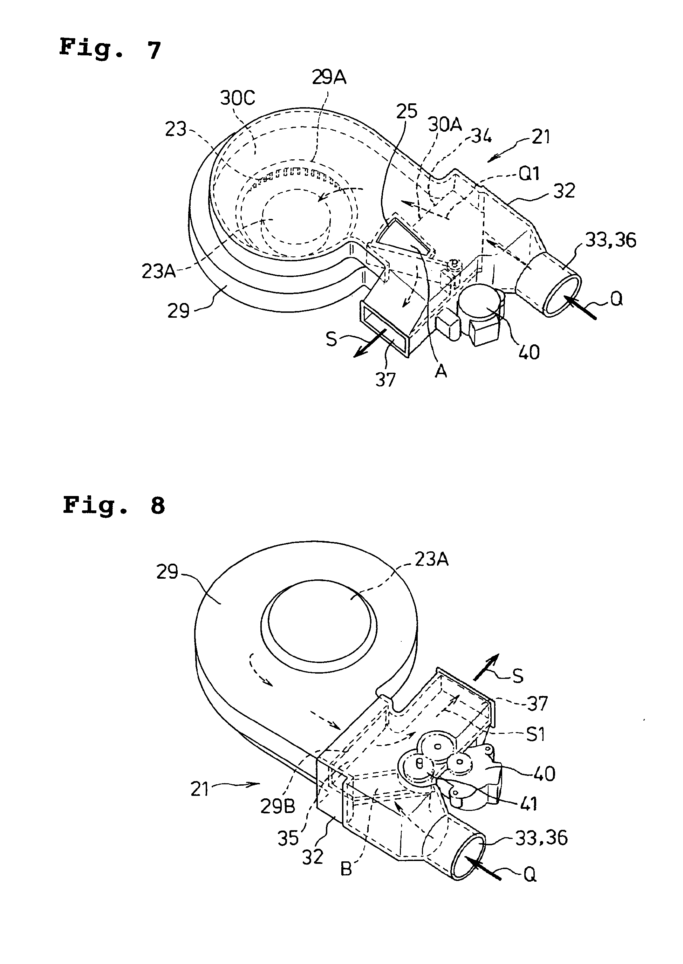

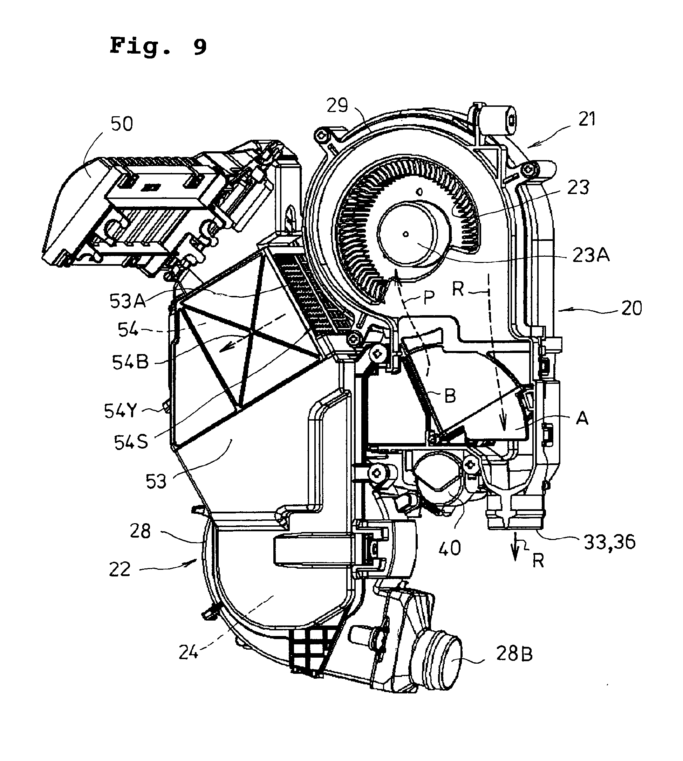

This will be further described in detail. The air flows in the air supply mode are shown by arrows in Figs. 6, 7 and 8. The selector valve A opens the suction port 33 of outdoor air and closes the indoor air inlet 25 as shown in Fig. 7, and the second selector valve B opens the air supply port 37 for outdoor air and also closes the exhaust port 36 of indoor air as shown in Fig. 8. Therefore, by operation (ON) of the air supply and exhaust fan 23, outdoor air is sucked from the outdoor air supply line 26 through the suction port 33, passed through the air supply route composed of the outdoor air suction route Q and the indoor supply route S, and introduced into the duct 53 through the air supply port 37. The air introduced to the duct 53 is then passed through a passage 54A of the total heat exchanger 54, carried in the cover 51 of the ultraviolet ray generator 50, where it is disinfected or sterilized by the ultraviolet ray generation part 52, and run into the air conditioner 1 from the outlet 51A. The outdoor air run into the air conditioner 1 is passed through fins of the heat exchanger 3 and circulated to the inside of the house by the blower 4 in the air conditioner 1.

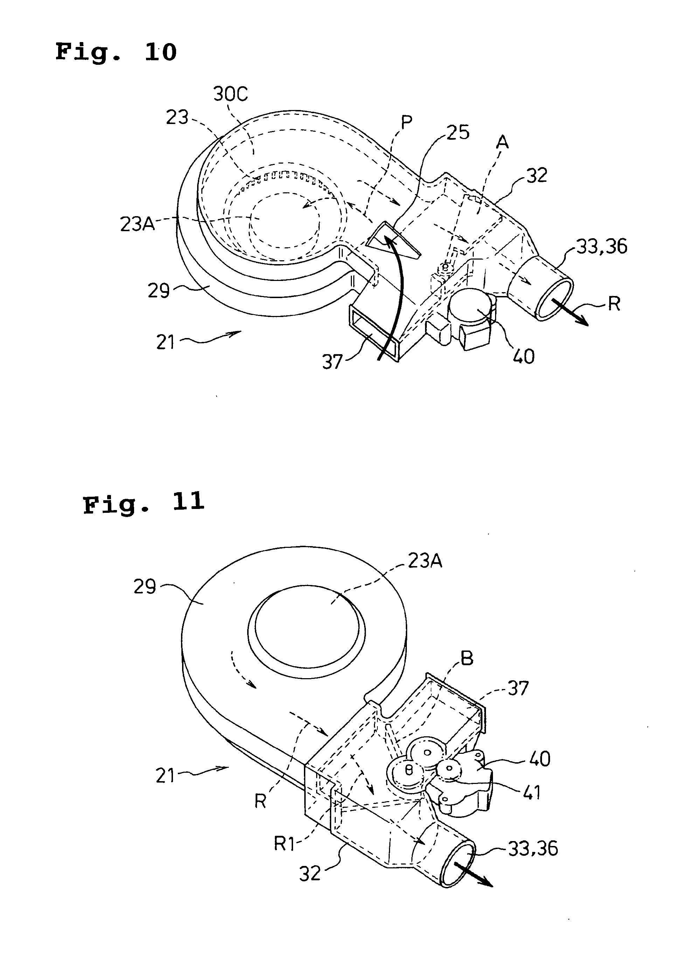

The air flows in the exhaust mode are shown in Figs. 9, 10 and 11. The first selector valve A closes the suction port 33 of outdoor air and opens the indoor air inlet 25 as shown in Fig. 10, and the second selector valve B closes the air supply port 37 of outdoor air and opens the exhaust port 36 of indoor air as shown in Fig. 11. Therefore, by operation (ON) of the air supply and exhaust fan 23, the indoor air introduced into the air conditioner 1 is sucked from the indoor air inlet 25, passed through the indoor air suction route P and the outdoor exhaust route R, carried into the outdoor exhaust line 27 through the exhaust port 36 of indoor air, and discharged outdoors. In the exhaust mode, further, the exhaust exclusive fan 24 is operated, whereby the indoor air of the house is sucked from the suction port 53A formed in a part of the duct 53, passed through a passage 54B of the total heat exchanger 54 and then through the exhaust exclusive fan 24, and discharged from the exhaust port 28B to the outside through the exhaust passage W passing the outdoor exhaust line 27 or a different exhaust pipe (not shown).

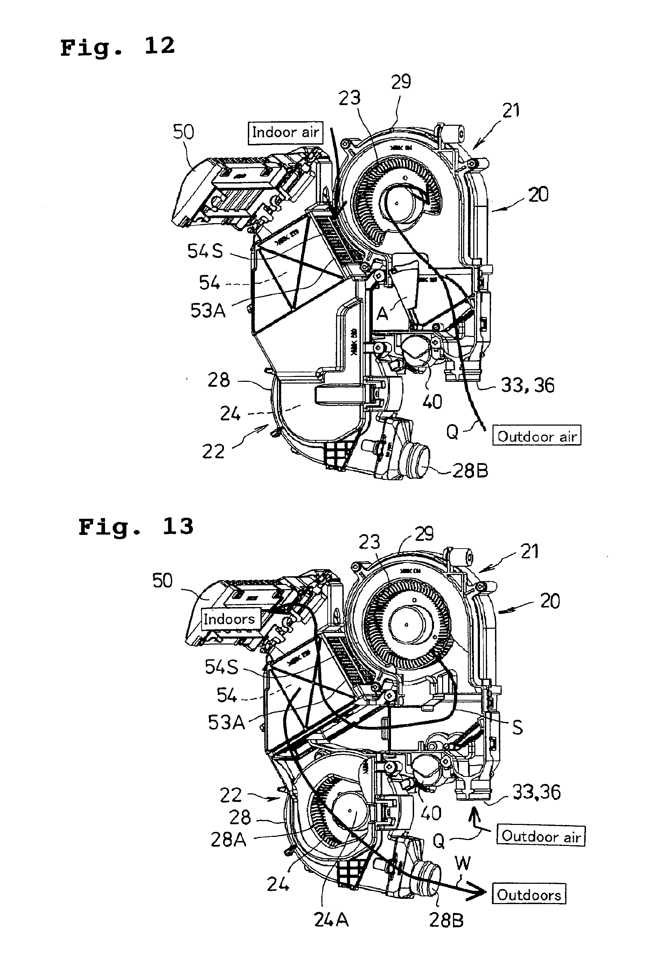

In the simultaneous air supply and exhaust mode, as shown in Figs. 12 and 13, outdoor air is supplied into the inside through the air supply routes Q and S of the air supply and exhaust passage by operation (ON) of the air supply and exhaust fan 23, and the indoor air is discharged outdoors through the exhaust passage W by operation (ON) of the exhaust exclusive fan 24. Namely, the first selector valve A opens the suction port 33 of outdoor air and closes the indoor air inlet 25 as shown in Fig. 7, and the second selector valve B opens the air supply port 37 of outdoor air and closes the exhaust port 36 of indoor air. Therefore, similarly to the air supply mode, by operation (ON) of the air supply and exhaust fan 23, outdoor air is sucked from the outdoor air supply line 26 through the suction port 33, passed through the outdoor air suction route Q and the indoor supply route S, and further carried into the duct 53 through the air supply port 37. The air run into the duct 53 is passed through the passage 54A of the total heat exchanger 54, carried in the cover 51 of the ultraviolet ray generator 50, where it is disinfected or sterilized by the ultraviolet ray generation part 52, and then run into the air conditioner 1 through the outlet 51A. The outdoor air run into the air conditioner 1 is passed through the heat exchanger 3 and circulated to the inside of the house by the blower 4 within the air conditioner 1. Simultaneously therewith, the exhaust exclusive fan 24 is operated as described above, whereby the indoor air of the house is sucked through the suction port 53A formed in a part of the duct 53, passed through the passage 54B of the total heat exchanger 54 and then through the exhaust exclusive fan 24, and discharged to the outside from the exhaust port 28B through the exhaust passage W passing the outdoor exhaust line 27 or a different exhaust pipe (not shown).

As stated above, since indoor exhaust can be rapidly performed by the operation (ON) of the air supply and exhaust fan 23 and the exhaust exclusive fan 24 in the exhaust mode, this is effective in a case that the indoor air is contaminated. In the air supply mode, outside air can be effectively introduced to purify the indoor air by operation of the air supply and exhaust fan 23. Further, in the simultaneous air supply and exhaust mode, since air supply and exhaust can be simultaneously performed by the operation (ON) of the air supply and exhaust fan 23 and the exhaust exclusive fan 24, the effect of promoting indoor air purification can be exhibited. These modes can be easily and accurately controlled since such a control can be attained by the passage switching by the first selector valve A and the second selector valve B and the operations (ON) of the air supply and exhaust fan 23 and the exhaust exclusive fan 24.

In the simultaneous air supply and exhaust mode, as described above, the indoor air of the house is passed through the passage 54B of the total heat exchanger 54 by the operation of the exhaust exclusive fan 24, and outdoor air is passed through the passage 54A of the total heat exchanger 54 by the operation of the air supply and exhaust fan 23. The passage 54A and the passage 54B of the total heat exchanger 54 are constituted so that the outdoor air passed through the passage 54A of the total heat exchanger 54 and the indoor air passed through the passage 54B are heat-exchanged without mixing. The total heat exchanger 54 comprises a total heat-transfer element 54S detachably stored in a synthetic resin-made case 54K. For this purpose, the case 54K has an opening 54M1 and an opening 54M2 formed in the faces in the direction of the supply route S for outdoor air, and an opening 54M3 formed in a face in the direction of the exhaust passage W for indoor air. A filter frame 54C detachably supporting a filter 54D is attached to the case 54K so as to open and close the opening 54M1.

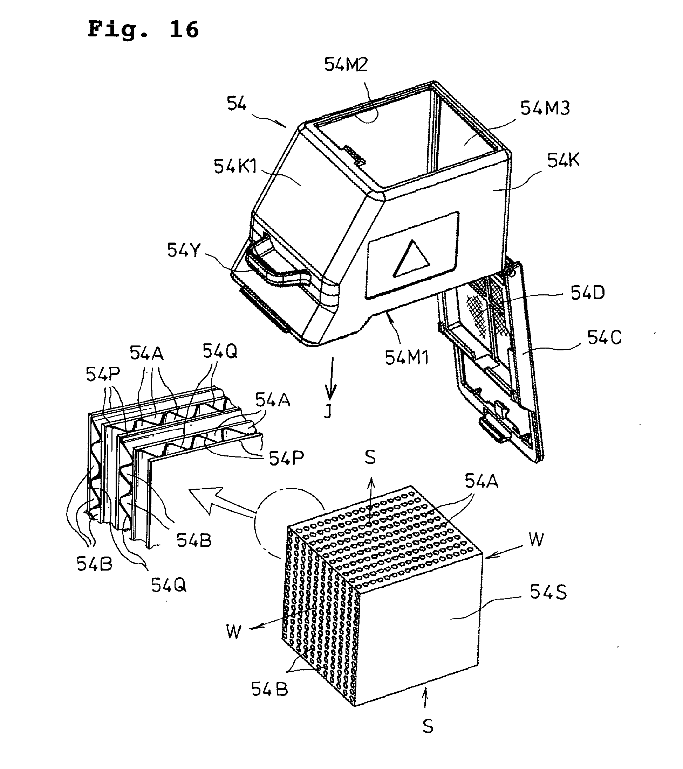

The total heat-transfer element 54S comprises, as shown in Fig. 16, two or more layers of air passages 54A and 54B each formed between heat-exchangeable vapor-permeable partitioning sheets 54P laminated with a space by a corrugated or angle passage member 54Q so that the outdoor air to be passed through the supply route S and the indoor air to be passed through the exhaust passage W form flows intersecting at substantially right angles through the partitioning sheet 54P. Namely, corrugated or angle paper-made passage members 54Q are arranged each between paper-made partitioning sheets 54P laminated with a space at one-step intervals in the direction of the supply route S, and in the direction crossing them substantially at right angles, the corrugated or angle paper-made passage members 54Q are arranged each between paper-made vapor-permeable partitioning sheets 54P laminated with a space at one-step intervals in the direction of the exhaust passage W.

According to this, the passages 54A for passing outdoor air in the direction of the supply route S are formed at one-step intervals (e.g., every odd step), and the passages 54B of the exhaust passage W for passing indoor air are formed at one-step intervals (e.g., every evens step) in the direction crossing them substantially at right angles, whereby the outdoor air passed through the passages 54A and the indoor air passed through the passages 54B are partitioned, as the whole, by the partitioning sheets 54P so as not to be mixed together, and heat-exchanged through the partitioning sheets 54P. The partitioning sheet 54P has the property of arresting permeation of carbon dioxide (CO2) but permitting permeation of moisture, and is made of paper as a material suitable therefor, which has the moisture moving effect of arresting permeation of CO2 molecules among pulp fibers but permeating water molecules. The vapor-permeability of the partitioning sheet 54P can be enhanced by addition of cellulose or by a proper chemical treatment.

Accordingly, since indoor air of buildings is dried in the cooling operation state of the air conditioner 1 in a high-temperature, high-humidity period such as summer, this air is heat-exchanged, when passed through the passages 54B, with humid outdoor air passed through the passages 54A through the partitioning sheets 54P to cool the outdoor air, and the outdoor air is dehumidified by permeating and releasing (vaporizing) the moisture of the outdoor air to the dry indoor air passed through the passages 54B through the partitioning sheets 54P. Therefore, the effects of dehumidifying and cooling the outdoor air to be introduced indoors can be obtained, and the outdoor air can be consequently introduced indoors in a preferable state. Since the indoor air of buildings is warm and slightly humid in the heating operation state of the air conditioner 1 in a dried low-temperature period such as winter, this indoor air is heat-exchanged, when passed through the passages 54A, with dry and cold outdoor air passed through the passages 54A through the partitioning sheets 54P to warm the outdoor air, and the moisture of the indoor air is permeated and released (vaporized) to the dry outdoor air passed through the passages 54A through the partitioning sheets 54P to humidify the outdoor air. Therefore, the effect of humidifying and warming the outdoor air to be introduced indoors can be obtained, and the outdoor air can be consequently introduced indoors in a preferable state.

In the total heat exchanger 54, the air passages 54B extending from the opening 54M1 to the opening 54M2 are formed through the filter 54D in the state where the total heat-transfer element 54S is stored in the case 54K, and the opening 54M1 is closed with the filter frame 54C installed with the filter 54D, whereby the supply route S for outdoor air is formed. Therefore, since dust contained in the outdoor air to be introduced is arrested by the filter 54D, the passage of the total heat-transfer element 54S is secured from blocking, and the life of the total heat-transfer element 54S is also extended. The indoor air which is introduced from the opening 54M3 to the air passages 54A and passed through the total heat-transfer element 54S reaches the space between the total heat-transfer element 54S and the front wall 54K1 of the case 54K in the front thereof, and flows down as shown by the arrow J in Fig. 16 by collision with the front wall 54K1, and is discharged outdoors from the exhaust exclusive fan 24 through the exhaust passage W. Since a handle 54Y is provided on the front wall 54K1, the total heat exchanger 54 can be detachably installed to the storage part 80 for the total heat exchanger 54 formed in the duct 53 of the ventilation unit 20 by holding and operating the handle 54Y.

According to such a structure, since the front surface of the total heat exchanger 54 is exposed to the front of the air conditioner 1 in a state where the front panel 7 of the air conditioner 1 is opened, the total heat exchanger 54 can be pulled out of the storage part 80 for the ventilation unit 20 by holding and pulling the handle 54Y in this state. Therefore, the replacement or cleaning of the total heat-transfer element 54S or the filter 54D is facilitated.

If one tube (pipe) communicating with the suction port 33 for outdoor air and the exhaust port 36 for indoor air is used for both air supply and exhaust, instead of two pipes of the outdoor air supply line 26 and the outdoor exhaust line 27 as shown in the drawings, the pipe structure to be extended from the air conditioner 1 to the outside can be formed of two pipes of this one tube (pipe) and a pipe connected to the exhaust port 28B forming the exhaust passage of the exhaust exclusive part 22. Further, if the pipe to be connected to the exhaust port 28B is omitted to use the one tube (pipe) also as the pipe to be connected to the exhaust port 28B, the pipe structure to be extended from the air conditioner 1 to the outside can be formed of only the one tube (pipe).

Since the air supply port 37 remains open by the second selector valve B in a state where the ventilation unit 20 is ended in the air supply mode, and the inside and outside of the house are in a communicating state through the ventilation unit 20, the duct member 32 or 53 may comprise a damper operable by an electric motor in order to interrupt this communication. The damper can be controlled to open the air passage in the duct member 32 or 53 when either the air supply mode or the exhaust mode is selected, and to close the air passage in the duct member 53 when any one of the air supply mode, the exhaust mode and the air supply and exhaust mode is ended.

The air conditioner of the present invention is never limited to the above-mentioned embodiment with respect to the forms and the like of the air conditioner 1 and the ventilation unit 2, and can be applied to various air conditioners without departing from the technical scope of the present invention.

## Claims

1. An air conditioner, comprising a ventilation device performing an exhausting operation for discharging indoor air outside a room and an air supplying operation for introducing outdoor air into the room, which is incorporated in an air conditioner body having a heat exchanger and a blower arranged therein so as to perform air-conditioning of the room,
said ventilation device comprising an air supply and exhaust part and an exhaust exclusive part, said air supply and exhaust part being provided with an air supply and exhaust fan and an air supply and exhaust passage related thereto, and said exhaust exclusive part being provided with an exhaust exclusive fan and an exhaust passage related thereto; and
said ventilation device being controlled to supply, in an air supply mode, outdoor air into the room through an air supply route of said air supply and exhaust passage by operation of said air supply and exhaust fan, with said exhaust exclusive fan being stopped, to discharge, in an exhaust mode, the indoor air outside the room through an exhaust route of said air supply and exhaust passage and through said exhaust passage by operation of said air supply and exhaust fan and said exhaust exclusive fan, and to supply, in an air supply and exhaust mode, outdoor air into the room through the air supply route of said air supply and exhaust passage by operation of said air supply and exhaust fan and also discharge the indoor air outside the room through said exhaust passage by operation of said exhaust exclusive fan, with the outdoor air to be passed through said air supply route and the indoor air to be passed through said exhaust passage being heat-exchanged in a total heat exchanger in said air supply and exhaust mode.

2. An air conditioner, comprising a ventilation device performing an exhausting operation for discharging indoor air outside a room and an air supplying operation for introducing outdoor air into the room, which is incorporated in an air conditioner body having a heat exchanger and a blower arranged therein to perform air-conditioning of the room,
said ventilation device comprising an air supply and exhaust part and an exhaust exclusive part, and constituting a ventilation unit composed of said air supply and exhaust part provided with a one-way rotating air supply and exhaust fan and an air supply and exhaust passage related thereto and said exhaust exclusive part provided with an exhaust exclusive fan and an exhaust passage related thereto; and
said ventilation unit being controlled to supply, in an air supply mode, outdoor air into the room through an air supply route of said air supply and exhaust passage by operation of said air supply and exhaust fan, with said exhaust exclusive fan being stopped, to discharge, in an exhaust mode, the indoor air outside the room through an exhaust route of said air supply and exhaust passage and through said exhaust passage by operation of said air supply and exhaust fan and said exhaust exclusive fan, and to supply, in air supply and exhaust mode, outdoor air into the room through an air supply route of said air supply and exhaust passage by operation of said air supply and exhaust fan and also discharge the indoor air outside the room through said exhaust passage by operation of said exhaust exclusive fan, with the outdoor air to be passed through said air supply route and the indoor air to be passed through said exhaust passage being heat-exchanged in a total heat exchanger in said air supply and exhaust mode.

3. The air conditioner according to claim 1 or 2, wherein said air supply and exhaust passage is switchingly controlled to said air supply route and to said exhaust route by a selector valve, said selector valve comprises a first selector valve A which switches the air suction route to said air supply and exhaust fan between an indoor air suction route through an indoor air inlet and an outdoor air suction route through an outdoor air inlet, and a second selector valve B which switches the air discharge route from said air supply and exhaust fan between an outdoor exhaust route for discharging indoor air outside the room through an indoor air exhaust port and an indoor supply route for supplying outdoor air into the room through an outdoor air supply port, so that the flow of air blown out of said air supply and exhaust fan is switchingly controlled to be guided to said total heat exchanger through said second selector valve B or to be guided outside the room through said second selector valve B.

4. The air conditioner according to any one of claims 1 to 3, wherein said total heat exchanger comprises a total heat-transfer element detachably stored in a case, said total heat-transfer element having two or more layers of air passages formed so that the outdoor air to be passed through said air supply route and the indoor air to be passed through said exhaust passage form flows intersecting through a heat-exchangeable vapor-permeable sheet, and said case is adapted to be attachable to and detachable from said ventilation device.

5. An air conditioner, comprising a ventilation device performing an exhausting operation for discharging indoor air outside a room and an air supplying operation for introducing outdoor air into the room, which is incorporated in an air conditioner body having a heat exchanger and a blower arranged therein so as to perform air-conditioning of the room,
said air conditioner further comprising a total heat exchanger which performs, in an air supply and exhaust mode by said ventilation device, heat-exchange between the outdoor air to be supplied into the room through an air supply route and the indoor air to be discharged outside the room through an exhaust passage,
said total heat exchanger comprising a total heat-transfer element detachably stored in a case, said total heat-transfer element being adapted so that the outdoor air to be passed through said air supply route and the indoor air to be passed through said exhaust passage form flows intersecting through a heat-exchangeable vapor-permeable partitioning sheet, and
said case being adapted to be attachable to and detachable from the front side of the air conditioner.

6. The air conditioner according to any one of claims 1 to 5, wherein said total heat exchanger is covered with a front panel, while detachably storing, in a case, the total heat-transfer element having two or more layers of air passages each formed between heat-exchangeable vapor-permeable partitioning sheets laminated with a space by a corrugated or angle passage member so that the outdoor air to be passed through said air supply route and the indoor air to be passed through said exhaust passage form flows intersecting substantially at right angles through said partitioning sheet, and said case is adapted to be attachable to and detachable from the front side of the air conditioner in a state where said front panel is opened.
